# FASCICULE DE BREVET EUROPEEN

(11) **EP 4 025 466 B1**
(45) Date de publication et mention de la délivrance du brevet: **21.12.2022**
(21) Numéro de dépôt: 20780759.5
(22) Date de dépôt: 02.10.2020
(51) Int. Cl.: B60T 13/66

(54) **SYSTÈME DE FREINAGE POUR VÉHICULE ET VÉHICULE ÉQUIPÉ D'UN TEL SYSTÈME DE FREINAGE**
FAHRZEUGBREMSSYSTEM UND FAHRZEUG AUSGESSTATTET MIT EINEM SOLCHEN SYSTEM
BRAKE SYSTEM FOR VEHICLE AND VEHICLE EQUIPPED WITH SUCH A BRAKE SYSTEM

(30) Priorité: 15.10.2019 FR 1911497
(43) Date de publication de la demande: 13.07.2022
(73) Titulaire: Bluebus, 29500 Ergue Gaberic (FR)
(72) Inventeur: BARDOT, Christophe, 78180 MONTIGNY-LE-BRETONNEUX (FR); TOBO, François-Xavier, 78300 POISSY (FR)
(74) Mandataire: IPAZ
(86) Numéro de dépôt international: PCT/EP2020/077726
(87) Numéro de publication internationale: WO 2021/073902

(56) Documents cités:
- EP-A2- 0 916 867
- DE-A1-102004 009 466
- DE-A1-102012 212 329
- DE-A1-102016 203 563
- US-A1- 2018 290 640
- US-A1- 2019 248 348

## Description

La présente invention concerne un système de freinage pour un véhicule, en particulier un véhicule lourd, encore plus particulièrement un véhicule lourd de transport en commun terrestre de type bus, en particulier électrique. Elle concerne également un véhicule muni d'un tel système de freinage.

Le domaine de l'invention est le domaine des systèmes de freinage pour véhicules.

### Etat de la technique

Un véhicule nécessite un système de freinage efficace et robuste permettant d'assurer le ralentissement puis l'arrêt et l'immobilisation du véhicule dans des conditions sécurisées.

Un système de freinage selon l'état de la technique est montré par le document DE 10 2004 009466 A1.

En effet, un défaut de freinage intervenant sur un véhicule en mouvement peut avoir des conséquences catastrophiques pour le véhicule, mais aussi son environnement, compte tenu des difficultés évidentes pour arrêter le véhicule du fait de son poids.

Lorsque le véhicule est un véhicule lourd, par exemple un véhicule de transport de personnes, tel qu'un bus, le fonctionnement efficace du système de freinage revêt une importance capitale puisqu'un défaut du système de freinage peut avoir des conséquences terribles sur les passagers.

Par conséquent, il parait nécessaire de développer un système de freinage pour véhicules qui permet de faire face à des défaillances inattendues pouvant se produire au sein dudit système de freinage, et ce, sans augmenter drastiquement la complexité et le coût dudit système de freinage.

Un but de l'invention est de proposer un système de freinage amélioré pour véhicule.

Un autre but de l'invention est de proposer un système de freinage pour véhicule permettant de maintenir une fonctionnalité de freinage au sein dudit véhicule et d'éviter d'immobiliser ledit véhicule, en cas de défaillance partielle du système de freinage.

Un autre but de l'invention est de proposer un système de freinage pour véhicule permettant de conserver une capacité de freinage et d'arrêt du véhicule, en cas de défaillance majeure du système de freinage.

### Exposé de l'invention

L'invention permet d'atteindre au moins l'un de ces buts par un système de freinage pour véhicule, ledit système comprenant :
- un circuit de freinage avant prévu pour appliquer un freinage sur les roues d'un train avant dudit véhicule et comprenant des organes de freinage commandés par un organe de commande,
- un circuit de freinage arrière, indépendant dudit circuit de freinage avant, prévu pour appliquer un freinage sur les roues d'un train arrière dudit véhicule et comprenant des organes de freinage commandés par un organe de commande, et
- une première unité de pilotage (EBS), reliée aux organes de commande desdits circuits de freinage avant et arrière en vue de déclencher un freinage ;
caractérisé en ce qu'il comprend une deuxième unité de pilotage, indépendante de ladite première unité de pilotage, et configurée pour déclencher un freinage dans au moins un desdits circuits de freinage, et en particulier uniquement le circuit de freinage arrière.

Ainsi, l'invention permet de proposer un système de freinage pour véhicules comportant non seulement deux circuits de freinage indépendants pour appliquer un freinage au véhicule, mais aussi deux unités de pilotage indépendantes pour commander les deux circuits de freinage indépendants. Ainsi, le système selon l'invention permet de faire face à des défaillances partielles pouvant se produire non seulement dans l'un des circuits de freinage, par exemple au niveau d'un organe de freinage ou de l'organe de commande dudit circuit de freinage, mais aussi au niveau de l'une des unités de pilotage, et de conserver une fonctionnalité de freinage permettant soit de garder le véhicule en roulage, soit de procéder à son ralentissement, son arrêt et son immobilisation dans des conditions sécurisées.

Suivant une caractéristique particulièrement avantageuse, le système selon l'invention peut comprendre un module de commande de freinage d'urgence, relié aux première et deuxième unités de pilotage, et configuré pour commander un freinage d'urgence lorsque lesdites unités de pilotage sont en défaillance.

Ainsi, le système de freinage selon l'invention permet de réaliser un freinage et un arrêt du véhicule, lorsque les unités de pilotage sont toutes défaillantes.

En particulier, le module de commande de freinage d'urgence peut être configuré pour surveiller le fonctionnement des unités de pilotage et commander le freinage d'urgence lorsque lesdites unités de pilotage sont en défaillance.

Le module de commande de freinage d'urgence peut détecter la défaillance de chaque unité de pilotage en fonction des signaux envoyés par lesdites unités de pilotage. Plus particulièrement, le module de commande de freinage d'urgence peut détecter la défaillance de chaque unité de pilotage en l'absence de signal envoyé par ladite unité de pilotage.

Le module de commande de freinage d'urgence peut comprendre un contrôleur, ou un calculateur, électronique configurer pour interpréter les signaux en provenance de chaque unité de pilotage et en déduire une défaillance de ladite unité de pilotage.

Dans le cas où les circuits de freinage sont pneumatiques, ou hydrauliques, le module de commande de freinage d'urgence peut comprendre une électrovanne reliée à un circuit pneumatique, ou hydraulique, au sein du véhicule et configuré pour commander les organes de freinage.

Suivant une caractéristique avantageuse, pour au moins un circuit de freinage, le module de commande de freinage d'urgence peut être relié directement aux organes de freinage dudit circuit de freinage, et commander lesdits organes de freinage sans l'intermédiaire de l'organe de commande dudit circuit de freinage.

Ainsi, le système de freinage selon l'invention permet de réaliser un freinage d'urgence et un arrêt du véhicule, non seulement lorsque les unités de pilotage sont défaillantes, mais aussi lorsque les organes de commande des circuits de freinage sont défaillants.

Par conséquent, le système de freinage selon l'invention permet de conserver une fonctionnalité de freinage lorsqu'un nombre important de composants sont en défaillance dans le système de freinage.

Avantageusement, le module de commande de freinage d'urgence peut être configuré pour commander un freinage uniquement dans le circuit de freinage arrière.

Cette architecture permet de réaliser un freinage d'urgence, en cas de défaillance de toutes les unités de pilotage, tout en limitant la complexité et le coût du système de freinage.

Suivant un mode de réalisation préféré, nullement limitatif, combinant plusieurs des caractéristiques énoncées plus haut, le module de commande de freinage d'urgence peut être relié aux organes de freinage du circuit de freinage arrière pour commander un freinage uniquement dans le circuit de freinage arrière.

Suivant un mode de réalisation particulier, le module de commande de freinage d'urgence peut être disposé entre la deuxième unité de pilotage et le circuit de freinage arrière. Dans ce cas, la deuxième unité de pilotage déclenche un freinage dans le circuit de freinage arrière au travers dudit module de commande de freinage d'urgence.

Lorsque le module de commande de freinage d'urgence est directement relié aux organes de freinage du circuit arrière, la deuxième unité de pilotage déclenche un freinage dans le circuit de freinage arrière, en passant par le module de commande de freinage d'urgence, mais sans passer par l'organe de commande du circuit de freinage arrière. Dans ce cas, l'organe de commande du circuit de freinage arrière n'est utilisé que lorsque le freinage dans le circuit de freinage arrière est déclenché par la première unité de pilotage.

Suivant un mode de réalisation particulier et non limitatif, la deuxième unité de pilotage peut être prévue pour être reliée à un frein de parc dudit véhicule, et commander un freinage en fonction de l'état dudit frein de parc.

Un tel frein de parc n'est généralement utilisé que lorsque le véhicule est à l'arrêt, et est généralement activé de manière manuelle.

Chaque circuit de freinage peut réaliser un freinage selon une technologie de freinage connue.

Suivant un exemple de réalisation préféré, chaque circuit de freinage peut être pneumatique, ou hydraulique.

Dans ce cas, l'organe de commande de chaque circuit de freinage peut comprendre une électrovanne régulant la pression d'un fluide fourni, par un circuit pneumatique, ou hydraulique, aux organes de freinage dudit circuit de freinage.

Chaque organe de commande peut en outre comprendre un contrôleur, par exemple sous la forme d'un calculateur, pour gérer le fonctionnement de ladite électrovanne.

Quelle que soit la technologie de freinage utilisé dans chaque circuit de freinage, chaque organe de freinage de chaque circuit de freinage peut être configuré pour réaliser un freinage lorsqu'il n'est pas alimenté.

Autrement dit, chaque organe de freinage peut être configuré/choisi de sorte qu'il réalise un freinage lorsqu'il se trouve au repos.

Ainsi, le système selon l'invention permet de réaliser un freinage du véhicule lorsque l'ensemble des éléments de commande et de pilotage sont en défaillance.

Suivant un exemple de réalisation, chaque organe de freinage peut comprendre :
- un étrier venant serrer un disque solidaire d'une roue du véhicule,
- un ressort, ou similaire, configuré pour appliquer un effort de serrage de l'étrier, et
- un organe pneumatique ou hydraulique, par exemple un piston, configuré pour appliquer un effort d'ouverture de l'étrier lorsqu'il est alimenté par un fluide sous pression, tel que de l'air ou de l'huile.

Selon un autre aspect de la présente invention, il est proposé un véhicule comprenant un système de freinage selon l'invention.

Suivant une définition générale, le véhicule selon l'invention peut être un véhicule comportant au moins quatre roues et servant au transport de passagers ou de marchandises.

En particulier, le véhicule selon l'invention peut être un véhicule terrestre de transport en commun de personnes. Par exemple, le véhicule selon l'invention peut être un bus, ou un car, en particulier électrique ou hybride.

Le véhicule selon l'invention peut être un véhicule lourd, c'est-à-dire un véhicule terrestre de plus de 3,5 tonnes de poids total autorisé en charge (PTAC).

Avantageusement, le véhicule selon l'invention peut être hybride ou électrique.

Par véhicule électrique, on entend un véhicule propulsé uniquement par de l'énergie électrique emmagasinée dans des batteries électriques rechargeables à partir d'une source externe.

### Description des figures et modes de réalisation

D'autres avantages et caractéristiques apparaîtront à l'examen de la description détaillée d'un mode de réalisation nullement limitatif, et des dessins annexés sur lesquels
- la FIGURE 1 est une représentation schématique partielle d'un exemple de réalisation non limitatif d'un système de freinage selon l'invention ; et
- la FIGURE 2 est une représentation schématique d'un exemple de réalisation non limitatif d'un véhicule selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures les éléments communs à plusieurs figures conservent la même référence.

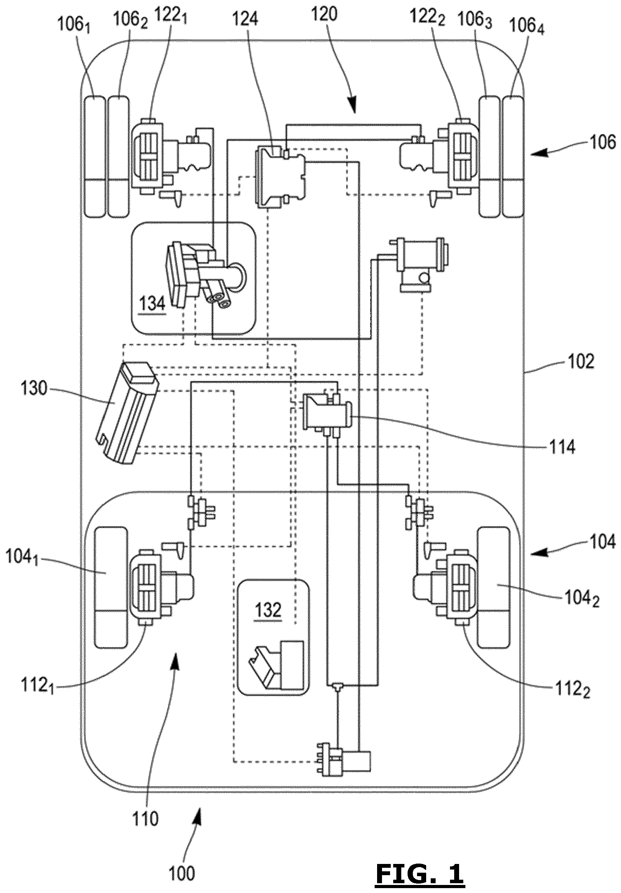

La FIGURE 1 est une représentation schématique d'un exemple de réalisation non limitatif d'un système de freinage selon l'invention

Le système de freinage 100, représenté sur la FIGURE 1, est utilisé au sein d'un véhicule 102 qui peut, par exemple, être un bus.

Le véhicule 102 comprend un train avant 104 comportant deux roues 104₁-104₂ et un train arrière 106 comportant quatre roues 106₁-106₄.

Le système de freinage 100 comprend un premier circuit de freinage, référencé globalement 110, permettant d'appliquer un freinage sur le train avant, et en particulier sur les roues avant 104₁-104₂.

Le premier circuit de freinage 110 comprend un premier organe de freinage 112₁ du côté de la roue avant 104₁ et un deuxième organe de freinage 112₂ du côté de la roue avant 104₂.

Le premier circuit de freinage 110 comprend également un organe de commande 114, relié aux organes de freinage 112₁-112₂, et qui commande les organes de freinage 112₁-112₂ pour appliquer un freinage au train avant 104.

Dans l'exemple représenté, et de manière nullement limitative, les organes de freinage 112₁-112₂ sont des freins pneumatiques et l'organe de commande 114 est une électrovanne équipée d'un calculateur.

L'électrovanne 114 est reliée aux freins pneumatiques 112₁-112₂ par des tuyaux d'alimentation en air comprimé, et commande les freins pneumatiques en régulant la pression de l'air comprimé fourni aux freins pneumatiques 112₁-112₂. L'air comprimé est fourni à l'électrovanne 114 par un compresseur (non représenté).

Les freins pneumatiques 112₁-112₂ sont montés et configurés de sorte qu'en l'absence d'air comprimé, ils appliquent un freinage sur les roues avant 104₁-104₂.

Le système de freinage 100 comprend un deuxième circuit de freinage, référencé globalement 120, permettant d'appliquer un freinage sur le train arrière, et en particulier sur les roues arrière 106₁-106₄.

Le deuxième circuit de freinage 120 comprend un premier organe de freinage 122₁ du côté des roues arrière 106₁-106₂ et un deuxième organe de freinage 122₂ du côté des roues arrière 106₃-106₄.

Le deuxième circuit de freinage 120 comprend également un organe de commande 124, relié aux organes de freinage 122₁-122₂, et qui commande les organes de freinage 122₁-122₂ pour appliquer un freinage au train arrière 106.

Dans l'exemple représenté, et de manière nullement limitative, les organes de freinage 122₁-122₂ sont des freins pneumatiques et l'organe de commande 124 est une électrovanne équipée d'un calculateur.

L'électrovanne 124 est reliée aux freins pneumatiques 122₁-122₂ par des tuyaux d'alimentation en air comprimé, et commande les freins pneumatiques en régulant la pression de l'air comprimé fourni aux freins pneumatiques 122₁-122₂. L'air comprimé est fourni à l'électrovanne 124 par un compresseur (non représenté).

Les freins pneumatiques 122₁-122₂ sont montés et configurés de sorte qu'en l'absence d'air comprimé, ils appliquent un freinage sur les roues arrière 106₁-106₄.

Comme représenté sur la FIGURE 1, le circuit de freinage avant 110 est indépendant du circuit de freinage arrière 120. Chaque circuit de freinage peut être commandé individuellement et indépendamment de l'autre circuit de freinage, pour réaliser un freinage.

Le système de freinage 100 comprend en outre une première unité de pilotage 130, pour piloter les circuits de freinage avant 110 et arrière 120. Pour ce faire, la première unité de pilotage est reliée à l'organe de commande 114 du circuit de freinage avant, et à l'organe de commande 124 du circuit de freinage arrière, au travers de lignes de communication, et en particulier au travers d'un bus de communication de type CAN. Ainsi, la première unité de pilotage 130 peut émettre une commande, ou une consigne, de freinage à destination de l'organe de commande 114 pour demander un freinage dans le circuit de freinage avant 110, et/ou une commande, ou une consigne, de freinage à destination de l'organe de commande 124 pour demander un freinage dans le circuit de freinage arrière 120.

La première unité de pilotage 130 peut être réalisée par un calculateur, par exemple.

Le système de freinage 100 comprend une deuxième unité de pilotage 132, indépendante de la première unité de pilotage 130, et agencée pour commander un freinage de manière indépendante de la première unité de pilotage. Dans l'exemple représenté, et de manière nullement limitative, la deuxième unité de pilotage est agencée pour piloter uniquement le circuit de freinage arrière 120, et déclencher un freinage dans le circuit de freinage arrière uniquement. Alternativement, la deuxième unité de pilotage 132 peut être agencée pour déclencher un freinage dans le circuit de freinage avant 110 uniquement, ou encore dans les deux circuits de freinage 110 et 120.

La deuxième unité de pilotage 132 peut être réalisée par un calculateur, par exemple.

La deuxième unité de pilotage 132 peut être associée à un frein de parc, et déclencher un freinage en fonction de l'état dudit frein de parc.

En outre, le système de freinage 100 comprend un module 134 de commande de freinage d'urgence, lorsque les unités de pilotage 130 et 132 sont en défaillance.

Pour ce faire, le module de commande de freinage d'urgence 134 est relié d'une part à la première unité de pilotage 130 et d'autre part à la deuxième unité de pilotage 132 par des lignes de communication, ou au travers d'un bus de communication, par exemple de type CAN. La défaillance de chaque unité de pilotage 130-132 est détectée de manière individuelle, par le module de commande de freinage d'urgence 134, en fonction des signaux envoyés par cette unité de pilotage. Plus particulièrement, lorsque le module de commande de freinage d'urgence 134 ne reçoit plus de signal de la part d'une unité de pilotage, cela indique une défaillance de ladite unité de pilotage.

Dans l'exemple représenté, et de manière nullement limitative, le module de commande de freinage d'urgence 134 est agencé pour déclencher un freinage d'urgence uniquement au sein du circuit de freinage arrière. Alternativement, le module 134 peut être agencé pour déclencher un freinage dans le circuit de freinage avant 110 uniquement, ou encore dans les deux circuits de freinage 110 et 120.

Dans la configuration représentée sur la FIGURE 1, le module 134 est directement relié aux organes de freinage 122₁ et 122₂ du circuit de freinage arrière 120, sans passer par l'organe de commande 124 du circuit de freinage arrière. Ainsi, le module 134 peut déclencher un freinage, même lorsque l'organe de commande 124 est en défaillance.

Dans le cas où les organes de freinage 122₁-122₂ sont pneumatiques, le module de commande de freinage d'urgence 134 peut être une électrovanne associée à un calculateur, alimentant lesdits organes de freinage 122₁-122₂ en air comprimé.

Dans l'exemple représenté, et de manière nullement limitative, la deuxième unité de pilotage 132 est reliée au circuit de freinage arrière 120, au travers du module de commande de freinage d'urgence 134. Par conséquent, la deuxième unité de pilotage 132 commande un freinage dans le circuit de freinage arrière au travers dudit module 134. De plus, lorsqu'une commande de freinage est émise par la deuxième unité de pilotage 132, elle est appliquée directement aux organes de freinage 122₁-122₂, sans passer par l'organe de commande 124 du circuit de freinage arrière 120.

Bien entendu, il est possible de prévoir une configuration différente dans laquelle, la deuxième unité de pilotage 132 est reliée à l'organe de commande 124, par l'intermédiaire ou non du module 134. Dans ce cas, une commande de freinage émise par la deuxième unité de pilotage 132 est traitée par ledit organe de commande 124, qui commande à son tour les organes de freinage 122₁-122₂.

Dans l'exemple représenté, chaque circuit de freinage est pneumatique. Alternativement, au moins un des circuits de freinage peut être d'une autre technologie, à savoir hydraulique ou électrique.

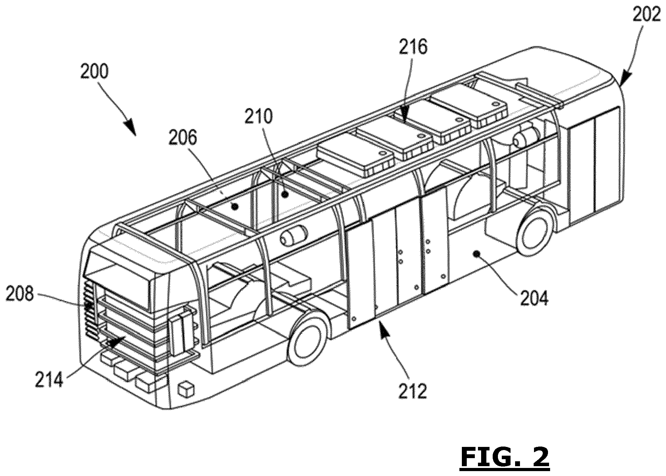

La FIGURE 2 est une représentation schématique d'un exemple de réalisation non limitatif d'un véhicule selon l'invention.

Le véhicule 200, représenté sur la FIGURE 2, est un bus électrique comportant un habitacle délimité par une paroi avant 202, deux parois latérales longitudinales 204 et 206, une paroi arrière 208, une paroi supérieure 210 et une paroi inférieure 212.

Le bus électrique 200 comporte un ou plusieurs moteurs électriques (non représentés), des modules 214, dits arrière, de stockage d'énergie électrique, disposés du côté de la paroi arrière 208. Le bus 200 comprend en outre des modules 216, dits supérieurs, de stockage d'énergie électrique, disposés dans un logement aménagé dans la paroi supérieure 210 du bus 200.

Le bus électrique 200 est mis en mouvement exclusivement par l'énergie électrique fournie par les modules de stockage d'énergie électriques 214 et 216, qui peuvent être des batteries ou des supercapacités.

Les modules de stockage d'énergie électrique 214 et 216 sont rechargés depuis une source électrique externe, par l'intermédiaire d'un câble de rechargement, comprenant éventuellement un fil pilote.

Le bus électrique 200 est équipé d'un système de freinage selon l'invention, et en particulier du système de freinage 100 de la FIGURE 1.

Bien entendu, l'invention n'est pas limitée aux exemples détaillés cidessus.

## Revendications

1. Système de freinage (100) pour véhicule, ledit système (100) comprenant :
- un circuit de freinage avant (110) prévu pour appliquer un freinage sur les roues (104₁-104₂) d'un train avant (104) dudit véhicule et comprenant des organes de freinage (112₁-112₂) commandés par un organe de commande (114),
- un circuit de freinage arrière (120), indépendant dudit circuit de freinage avant (110), prévu pour appliquer un freinage sur les roues (106₁-106₄) d'un train arrière (106) dudit véhicule et comprenant des organes de freinage (122₁-122₂) commandés par un organe de commande (124),
- une première unité de pilotage (130), reliée aux organes de commande (114,124) desdits circuits de freinage avant (110) et arrière (120) en vue de déclencher un freinage, et
- une deuxième unité de pilotage (132), indépendante de ladite première unité de pilotage (130), et configurée pour déclencher un freinage dans au moins un desdits circuits de freinage (110,120), et en particulier uniquement le circuit de freinage arrière (120) ;
**caractérisé en ce qu'**il comprend en outre un module (134) de commande de freinage d'urgence, relié aux première et deuxième unités de pilotage (130,132), et prévu pour commander un freinage d'urgence lorsque lesdites unités de pilotage (130,132) sont en défaillance.

2. Système (100) selon la revendication précédente, **caractérisé en ce que**, pour au moins un circuit de freinage, le module de commande de freinage d'urgence (134) est relié aux organes de freinage (122₁-122₂) dudit circuit de freinage (120), et commande lesdits organes de freinage (122₁-122₂) sans l'intermédiaire de l'organe de commande (124) dudit circuit de freinage (120)

3. Système (100) selon l'une quelconque des revendications précédentes, **caractérisé en ce que** le module de commande de freinage d'urgence (134) est configuré pour commander un freinage uniquement dans le circuit de freinage arrière (120).

4. Système (100) selon l'une quelconque des revendications précédentes, **caractérisé en ce que** le module de commande de freinage d'urgence (134) est disposé entre la deuxième unité de pilotage (132) et le circuit de freinage arrière (120), ladite deuxième unité de pilotage (132) déclenchant un freinage dans le circuit de freinage arrière (120) au travers dudit module de commande de freinage d'urgence (134).

5. Système (100) selon l'une quelconque des revendications précédentes, **caractérisé en ce que** la deuxième unité de pilotage (132) est prévue pour être reliée à un frein de parc dudit véhicule (102;200), et commander un freinage en fonction de l'état dudit frein de parc.

6. Système (100) selon l'une quelconque des revendications précédentes, **caractérisé en ce que** chaque circuit de freinage (110,120) est pneumatique, ou hydraulique, et l'organe de commande (114,124) de chaque circuit de freinage (110,120) comprend une électrovanne régulant la pression d'un fluide fourni, par un circuit pneumatique, ou hydraulique, aux organes de freinage (112₁-112₂,122₁-122₂) dudit circuit de freinage (110,120).

7. Système (100) selon l'une quelconque des revendications précédentes, **caractérisé en ce que** chaque organe de freinage (112₁-112₂,122₁-122₂) de chaque circuit de freinage (110,120) est configuré pour réaliser un freinage lorsqu'il n'est pas alimenté.

8. Véhicule (102,200) comprenant un système de freinage selon l'une quelconque des revendications précédentes.

9. Véhicule (200) selon la revendication précédente, **caractérisé en ce qu'**il s'agit d'un bus électrique ou hybride.

## Patentansprüche

1. Bremssystem (100) für ein Fahrzeug, wobei das System (100) umfasst:
- einen vorderen Bremskreis (110), der dazu vorgesehen ist, eine Bremsung auf die Räder (104₁-104₂) einer Vorderachse (104) des Fahrzeugs auszuüben, und der Bremsorgane (112₁-112₂) umfasst, die von einem Bedienteil (114) gesteuert werden,
- einen hinteren Bremskreis (120), der von dem vorderen Bremskreis (110) unabhängig ist, der dazu vorgesehen ist, eine Bremsung auf die Räder (106₁-106₄) einer Hinterachse (106) des Fahrzeugs auszuüben, und der Bremsorgane (122₁-122₂) umfasst, die von einem Bedienteil (124) gesteuert werden,
- eine erste Steuereinheit (130), die mit den Bedienteilen (114, 124) des vorderen (110) und des hinteren (120) Bremskreises verbunden ist, um eine Bremsung auszulösen, und
- eine zweite Steuereinheit (132), die von der ersten Steuereinheit (130) unabhängig ist, und die konfiguriert ist, um eine Bremsung in mindestens einem der Bremskreise (110, 120) auszulösen, und insbesondere nur in dem hinteren Bremskreis (120);
**dadurch gekennzeichnet, dass** es ferner ein Notbremssteuermodul (134) umfasst, das mit der ersten und der zweiten Steuereinheit (130, 132) verbunden ist und dazu vorgesehen ist, eine Notbremsung zu steuern, wenn die Steuereinheiten (130, 132) ausfallen.

2. System (100) nach dem vorstehenden Anspruch,
**dadurch gekennzeichnet, dass** für mindestens einen Bremskreis das Notbremssteuermodul (134) mit den Bremsorganen (122₁-122₂) des Bremskreises (120) verbunden ist, und die Bremsorgane (122₁-122₂) ohne die Zwischenschaltung des Bedienteils (124) des Bremskreises (120) steuert.

3. System (100) nach einem der vorstehenden Ansprüche,
**dadurch gekennzeichnet, dass** das Notbremssteuermodul (134) konfiguriert ist, um eine Bremsung nur in dem hinteren Bremskreis (120) zu steuern.

4. System (100) nach einem der vorstehenden Ansprüche,
**dadurch gekennzeichnet, dass** das Notbremssteuermodul (134) zwischen der zweiten Steuereinheit (132) und dem hinteren Bremskreis (120) angeordnet ist, wobei die zweite Steuereinheit (132) über das Notbremssteuermodul (134) eine Bremsung in dem hinteren Bremskreis (120) auslöst.

5. System (100) nach einem der vorstehenden Ansprüche,
**dadurch gekennzeichnet, dass** die zweite Steuereinheit (132) dazu vorgesehen ist, mit einer Feststellbremse des Fahrzeugs (102;200) verbunden zu werden, und eine Bremsung in Abhängigkeit von dem Zustand der Feststellbremse zu steuern.

6. System (100) nach einem der vorstehenden Ansprüche,
**dadurch gekennzeichnet, dass** jeder Bremskreis (110, 120) pneumatisch oder hydraulisch ist, und das Bedienteil (114, 124) jedes Bremskreises (110, 120) ein Magnetventil umfasst, das den Druck eines Fluids reguliert, das über einen pneumatischen oder hydraulischen Kreis den Bremselementen (112₁-112₂,122₁-122₂) des Bremskreises (110,120) zugeführt wird.

7. System (100) nach einem der vorstehenden Ansprüche,
**dadurch gekennzeichnet, dass** jedes Bremsorgan (112₁-112₂, 122₁-122₂) jedes Bremskreises (110, 120) konfiguriert ist, um eine Bremsung auszuführen, wenn es nicht mit Strom versorgt wird.

8. Fahrzeug (102, 200), das ein Bremssystem nach einem der vorstehenden Ansprüche umfasst.

9. Fahrzeug (200) nach dem vorstehenden Anspruch,
**dadurch gekennzeichnet, dass** es sich um einen Elektro- oder Hybridbus handelt.

## Claims

1. A vehicle braking system (100), said system (100) comprising:
- a front braking circuit (110) intended for applying braking to the wheels (104₁-104₂) of a front axle (104) of said vehicle and comprising braking members (112₁-112₂) controlled by an actuator (114),
- a rear braking circuit (120), independent of said front braking circuit (110), intended for applying braking to the wheels (106₁-106₄) of a rear axle (106) of said vehicle and comprising braking members (122₁-122₂) controlled by an actuator (124),
- a first control unit (130), connected to the actuators (114,124) of said front (110) and rear (120) braking circuits, for triggering braking, and
- a second control unit (132), independent of said first control unit (130), and configured to trigger braking in at least one of said braking circuits (110,120), and in particular only the rear braking circuit (120);
**characterized in that** it further comprises an emergency braking control module (134), connected to the first and second control units (130,132), and intended for controlling emergency braking when said control units (130,132) fail.

2. The system (100) according to the preceding claim, **characterized in that,** for at least one braking circuit, the emergency braking control module (134) is connected to the braking members (122₁-122₂) of said braking circuit (120), and controls said braking members (122₁-122₂) without the intermediation of the actuator (124) of said braking circuit (120).

3. The system (100) according to any one of the preceding claims, **characterized in that** the emergency braking control module (134) is configured to control braking only in the rear braking circuit (120).

4. The system (100) according to any one of the preceding claims, **characterized in that** the emergency braking control module (134) is arranged between the second control unit (132) and the rear braking circuit (120), said second control unit (132) triggering braking in the rear braking circuit (120) through said emergency braking control module (134).

5. The system (100) according to any one of the preceding claims, **characterized in that** the second control unit (132) is intended to be connected to a parking brake of said vehicle (102;200), and to control braking based on the status of said parking brake.

6. The system (100) according to any one of the preceding claims, **characterized in that** each braking circuit (110,120) is pneumatic or hydraulic, and the actuator (114,124) of each braking circuit (110,120) comprises a solenoid valve regulating the pressure of a fluid provided by a pneumatic, or hydraulic, circuit to the braking members (112₁-112₂, 122₁-122₂) of said braking circuit (110,120).

7. The system (100) according to any one of the preceding claims, **characterized in that** each braking member (112₁-112₂, 122₁-122₂) of each braking circuit (110,120) is configured to carry out braking when it is not energized.

8. A vehicle (102,200) comprising a braking system according to any one of the preceding claims.

9. The vehicle (200) according to the preceding claim, **characterized in that** it is an electric or hybrid bus.
